# EUROPEAN PATENT APPLICATION

(11) **EP 1 727 106 A1**
(43) Date of publication of application: **29.11.2006**
(21) Application number: 05253272.8
(22) Date of filing: 27.05.2005
(51) Int. Cl.: G08C 17/02, H04L 12/56, G01S 1/00

(54) **Wireless telemetry**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A networked collection of environmental telemetry sensors 10, 11, 12, 13........ use data derived from received wireless signals both for supporting data communications and for characterisation of environmental phenomena. The sensors are arranged to float in the ocean and form an ad hoc communications network to exchange oceanographic data with each other. Ocean waves cause attenuation or other impairments of the signals transmitted between the sensors, which result in measurable impairment to the signals received by each transceiver. Such impairment is measured by the individual transceivers and collected as environmental data.

## Description

This invention relates to wireless telemetry, and in particular environmental observation systems (EOS). Such systems comprise a number of sensors, which are deployed with the purpose of observing environmental variables for extended periods of time. The variables to be measured may be any property of the environment in which the sensors are deployed, including physical conditions (e.g. temperature), chemistry (e.g. pollutant levels), and human or other biological activity (e.g. behavioural studies).

Such systems are of particular utility in areas where human development is very limited, for example in the ocean. The harshness of the environment places several constraints on the robustness, serviceability, and performance of the sensors. In particular, such devices are usually designed to operate with no physical connection to a fixed infrastructure, instead having their own internal power supply and communicating their readings over a wireless network, such that those readings may be interpreted at a distance. To avoid the expense and difficulty of retrieving them, the sensors are often designed to be expendable, their useful life essentially depending on battery longevity. The sensors may be suspended in a fluid medium such as water, air, or lava, such that they can be carried by the fluid, in order to measure fluid flow properties such as ocean currents. In this case, the sensors may measure their position from time to time (for example using data from a global positioning system. Alternatively, they may each be moored in a fixed position, in order to collect data at that point. They may be moored in such a way that they have some freedom of movement relative to their anchoring point - they rotate, go up and down, or are dragged by tides and other currents - and such movement may be detected, for example by inertial sensors or by the tension in the mooring lines. The initial distribution may be achieved for example by dropping from aircraft, or dispersing the sensors from a convenient fixed point into a moving medium such as the wind or an ocean current. In the ocean, wireless telemetry may be used to measure such properties as transport of materials, chemical composition, or temperature. One property of interest to oceanographers is the behaviour of surface waves, particularly properties such as amplitude and frequency of the waves. This may be achieved using sensor devices floating on the surface, (either anchored, or free to move with tides and other currents), using inertial measurement systems such as tilt meters or accelerometers. However such devices need moving parts, making them both expensive and complex, especially as the environments in which they operate make the sensors difficult to recover for maintenance or re-use. The cost and efficiency needed for deploying large numbers of sensing devices and organising the data collection from them makes these tasks difficult and expensive, and it is therefore desirable to make the individual devices as simple as possible. Despite the availability of remotely based oceanic remote sensing systems, there is a need for denser spatial collection of variable information in-situ, to allow oceanic phenomena to be described more accurately. Ad hoc wireless sensor networks can play an important role on monitoring such harsh settings, with higher sample resolution and more economy and flexibility. Such systems are discussed in International Patent Applications WO2005/006668 and WO2005/025147, in which radio data transmissions are used for establishing data links between transceivers. These data links are used to form a structured ad hoc network for transporting the data collected by the sensors. The sensors transmit their readings to each other so that the data ultimately reaches a data collection point or "gateway" where the data may be downloaded for analysis. The gateway devices typically have enhanced capabilities including processing, internal memory, constant power supply, and additional or improved wireless interfaces. Various techniques have been proposed for arranging that each sensor co-operates with its neighbours in the network such that the useful data that can be collected is maximised, for example the techniques discussed in the two patent applications to which reference has already been made.

Automated environmental sensing is often required to perform in harsh environments. Systems operating under those conditions need to limit vulnerability to operation collapse resulting from disruptions to the whole system and/or individual and collective component failure. Additionally, due to the geographical and numerical scale of the sensor deployments and limited opportunity for technical support, scientists need to reduce the cost and complexity of operation and configuration activities.

In an oceanographic environment, electromagnetic wave propagation can be seriously affected during periods when exceptional events of interest might be happening (e.g. storms or intense wave activity). In particular, movement (particularly tilting) of antennas, obstruction of line-of-sight paths by wave crests, and increased multi-path interference as the sea surface becomes less smooth can all affect propagation. Even in the absence of external electromagnetic interference, such signal distortions have impact on digital transmission quality - typically parameterised by bit error rate, signal to noise ratio, or loss of symbol and frame synchronisation - resulting in loss of data. In particular, it has been observed that RSSI (Received Signal Strength Indication) and packet rate vary according to wave and tide movement. Coding, increasing transmission power, and signal processing techniques can improve the integrity of transmitted packets in the attempt to provide transparent error-free service to applications. Nevertheless, the disruptions cannot be completely eradicated. It is perceived as particularly inconvenient that the propagation properties useful for digital communication deteriorate in those conditions in which the environmental variables to be measured are most likely to be of interest.Electromagnetic propagation over the sea surface has been extensively studied, mainly for over-the-horizon communication and backscatter radar. However, denser economical sensor deployments demand effective digital communication for shorter distances, using less transmitting power.

There is therefore a conflict between efficient measurement and the efficient transmission of that data to where it is required. For example, greater stiffness in mooring a buoy would allow better data communications performance, as the antenna would not move so much, but such a sensor would be less responsive to environmental input (as well as representing an obstacle to navigation). It would be possible to store the data collected at times when propagation is impaired, for transmission when sea conditions are calmer, but this requires extra memory storage, and also delays the transmission of the data, which may make it less useful for example in weather forecasting. Moreover, to do this would require accurate recognition that the fall in performance is due to the deterioration of the environment, rather than some internal problem with the device itself, or in one of its co-operating neighbours. It would be difficult for an individual device to assess changes in the environment in isolation, but the collegiate effort of co-operating devices could reach appropriate estimations.

The present invention recognises that the data communication overhead can itself become an additional source of environmental data. It has been empirically found that data links can be designed in such a way that persistent ocean wave activity deflects wireless radio communication in such a way that it produces a discrete and predictable impact on data packet exchange. Each transceiver can therefore obtain relevant information about its environment without the need for additional sensors.

Therefore, according to the invention, there is provided a networked collection of environmental telemetry sensors that use data derived from received wireless signals both for supporting data communications and for characterisation of environmental phenomena. Persistent packet transmission over a wireless link using a slotted medium access can produce reasonably accurate characterisation of the wave activity between transmitters and receivers. Using specific small-footprint software running in both ends of the data exchange, devices can measure the wave activity using packet activity trends. Consequently, each wireless transceiver can be in the position of obtaining relevant information about the surrounding ocean wave activity. These findings can be broadcast to nearby receivers and so are disseminated across the network.

This invention allows greater simplicity of the sensor devices because the measurement and information dispersal systems are one and the same. This reduces the cost of production, simplifies deployment due to the reduced size of the devices, extends battery life as there are fewer components requiring power, and improves reliability. The transmissions may use any wireless medium suitable for the purpose, such as electromagnetic (radio or optical) or acoustic signals.

Although the invention may have application in other environments in which wireless communications may be affected by a physical property of intrinsic interest, the embodiments to be described use electromagnetic characteristics to characterise the properties of waves on a liquid surface such as the ocean. Remote monitoring systems and digital communication systems operating over the sea surface are responsive to the distortions that electromagnetic signals suffer when travelling. Remote monitoring systems interpret those distortions for producing detailed characterisation of the reflecting surface whereas digital communication systems make specific provisions for limiting their disruptive effects on the quality of the data exchange. Oceanic wave activity remains the main source for attenuation of travelling electromagnetic transmissions for short to medium distances; consequently, the distorted signals have a close correlation with the wave periodicity and height, as described by Bass et al, "Radiophysical investigations of sea roughness (radio-oceanography) at the Ukrainian Academy of Sciences," IEEE Journal of Oceanic Engineering, vol. OE-2, no. 1, pp. 43-52, Jan.1977.

The accuracy and performance of this design can be improved by narrowing the scope of wave activity of interest. Design decisions such as frequency of the carrier, antenna height, and detection mechanisms facilitate the identification process using properties of wave propagation over the sea surface, as described by Voronovich and Zavorotny, "Effect of steep sea-waves on polarization ratio at low grazing angles," IEEE Transactions on Geoscience and Remote Sensing, vol. 38, no. 1 II, pp. 366-373, 2000. Confidence on the quality of measurements can be enhanced by correlating them to readings from non-inertial sensors such as accelerometers.

Because wave motion affects the received signal strength information (RSSI), antenna stability plays an important role on the desired range of symbol and signal recognition. RSSI records will vary at similar rate to wave activity, and can be correlated to other available readings.

The invention also extends to an individual sensor device for use in such a network, and a method of using such a network. The sensors may transmit signals having a range of frequencies, such as a "chirp" signal, and analyse the signals received from each other to determine how the propagation characteristics vary with frequency.

An embodiment of the invention will now be described, by way of example, with reference to the accompanying drawings, in which
Figure 1 is a schematic diagram of a network of devices operating according to the invention
Figure 2 is a schematic diagram of an individual device according to the invention
Figure 3 is a schematic diagram of the operation of the device of Figure 2

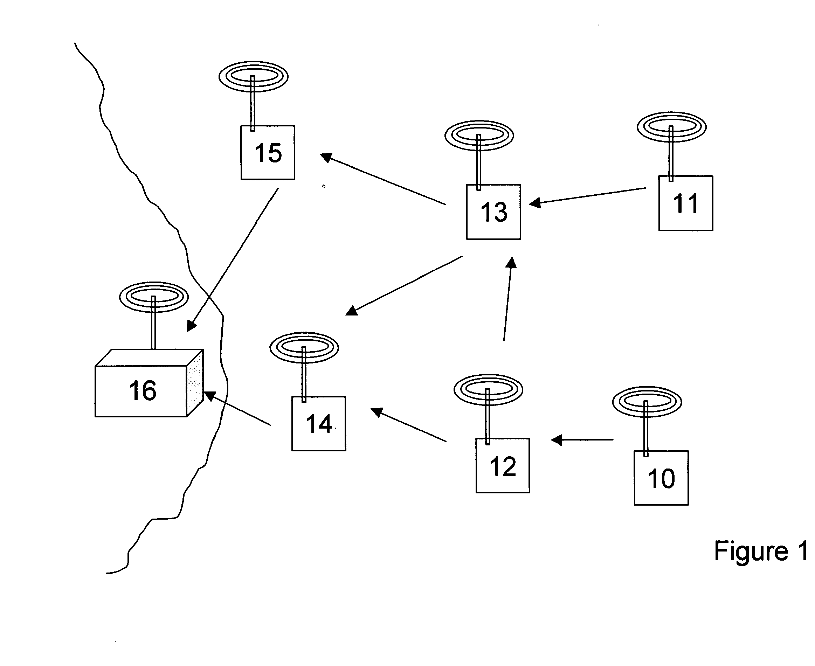

The elementary unit of a dispersed ad hoc communications system is known as a node. Figure 1 shows a number of such nodes 10, 11, 12, ..............16 distributed randomly across an environment. Each node (e.g. node 12) is able to communicate with at least one of its neighbours (10, 13, 14), such that they can form an *ad hoc* communications network. One (or more) of the nodes acts as a data collection point 16, which collects the data for subsequent analysis. The data collection point 16 may have enhanced capabilities including processing, internal memory, constant power supply, and additional or improved wireless interfaces. Typically it would be accessible by the researcher requiring the data, e.g. by being located onshore.

Various methods are known by which the individual nodes 10, 11, 12, 16 of a network may co-operate to efficiently transmit data between each other, such that the data can reach the data collection point 16 efficiently. Such systems are known for example from the applicant company's co-pending applications already mentioned. Links may be broken because of damage, battery expiry, overloading of an individual node's communications capability, or movement of neighbouring nodes out of range of each other. Because the distribution of the nodes is not predetermined, and indeed the nodes may be mobile, the transmission network requires a degree of redundancy in its connectivity to remain robust in the event of individual links being broken. Such arrangements attempt to ensure that as much of the data collected as possible reaches the data collection point 16 during the lifetime of the individual nodes. It should be noted that a node 12 consumes power and bandwidth in relaying data from one node 10 to another node 14, reducing the power available for it to collect its own data and transmit it. There is thus a conflict between the requirement to collect data and the requirement to relay data from other nodes. Particular factors to be taken into account include the need to avoid unnecessarily circuitous routings (e.g. 12-13-14), (and in particular complete loops), and the need to reduce the workload borne by nodes whose battery life is nearly spent or whose location (such as node 14) requires them to undertake a large share of the relaying work.

A node 14 may compress data received from multiple sources 12, 13, and/or generated by itself, into a single packet. It may suppress some data altogether if the node determines that it has already forwarded the same payload, having previously received it from a different source node. For example, referring to Figure 1, nodes 13 and 14 can both detect transmissions from node 12, and node 14 can also detect transmissions from node 13. Thus data collected by node 12, or relayed by it from a more remote node (10), will be received by node 14 twice, both directly from node 12 and by way of node 13. Node 14 can reduce the amount of data it has to relay by identifying the second instance of that data to reach it as being redundant, and therefore not forwarding it.

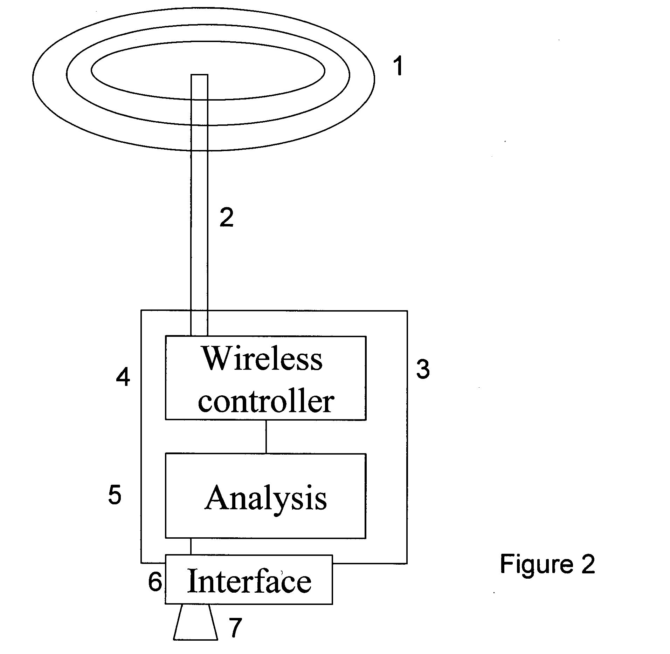

The device depicted in Figure 2 acts as a node in the network of Figure 1. It comprises a main body 3, which is preferably water-proof, so as to protect the internal components from water damage and in order to define an air chamber to allow the device to float on the surface of the water. For clarity certain necessary components not central to the invention, such as a power source, are omitted from the figure.

The wireless medium 1 to be used is based on its specific properties of propagation and refraction, and the dimensions of the obstacles/waves under observation, such that wave activity has a measurable effect on propagation between nodes without making communication impossible. The wavelength/frequency and modulation is chosen according to the bandwidth required and the properties of the medium through which it will propagate, the reflection properties of the medium, type of propagation (line of sight, ground path, etc), and effective range. Use of a Time Division Multiple access system, with guardbands wider than the length of the transmission, ensures effective transmission of the data whilst making detection of multipath interference possible. Maintaining a relatively low bit per second rate makes each individual bit wide enough that reflected signals do not impair symbol recognition. Oversampling events can also be used to ensure that useful data on signal impairment can be obtained without loss of the data in the signal itself.

A wireless antenna 2 is arranged to detect transmissions from neighbouring devices, and in its turn to broadcast transmissions for other devices to detect. The design of wireless interface is selected for two aspects: the sensitivity on detecting signals from the medium and directionality of the transmissions between nodes. A propagation footprint with a strong horizontal component is desirable for sensors floating on the ocean surface. The propagation characteristics of a time-varying signal will be very sensitive to any tilting of the devices - both the transmitter and the receiver. This will make tilting easy to detect. Provided the signal propagation has sufficient non-horizontal vertical component that it is not lost altogether, the degradation of signal strength will also be indicative of the tilt of the device, and thus the motion of the waves.

The wavelength of the radio signal should be selected such that degradation characteristics have significant sensitivity to the property being measured, whilst still carrying useful data. For ocean wave characterisation, frequencies of the order of 173MHz, equating to a wavelength of about 1.73 metres, have been found to be suitable. .Variable-frequency "chirp" signals may be used, to determine which parts of the chirp are attenuated the most.

Within the main body there is arranged a wireless controller 4 for detecting, filtering and decoding the received wireless signal, and in turn to generate outgoing signals for detection by other nodes. It should be noted that the node has a dual role, as it not only detects the quality of the received signals, as indicative of conditions between itself and the neighbouring node, but it also must relay those signals, along with any it generates itself, to other nodes. For this reason there must be sufficient redundancy in the signal to be generated that the signal quality can be impaired to a measurable extent without corrupting the information it carries beyond the point where it can be reliably recovered.

A control unit 5, typically a microprocessor, performs the processes necessary to measure signal quality and convert the results into data that can be relayed efficiently to other nodes. This process will be described in more detail later.

A data interface 6 connects the control unit with data collected from sensors 7 other than the radio interface - such as salinity and temperature. Position may be determined using a GPS sensor (not shown) or may be determined relative to other nodes using radio techniques. If the device is tethered, its position may be considered to be fixed in which case, once its position has been initially determined at or shortly after installation, an identity call-sign is sufficient to identify its position to the data collection point when submitting new data.

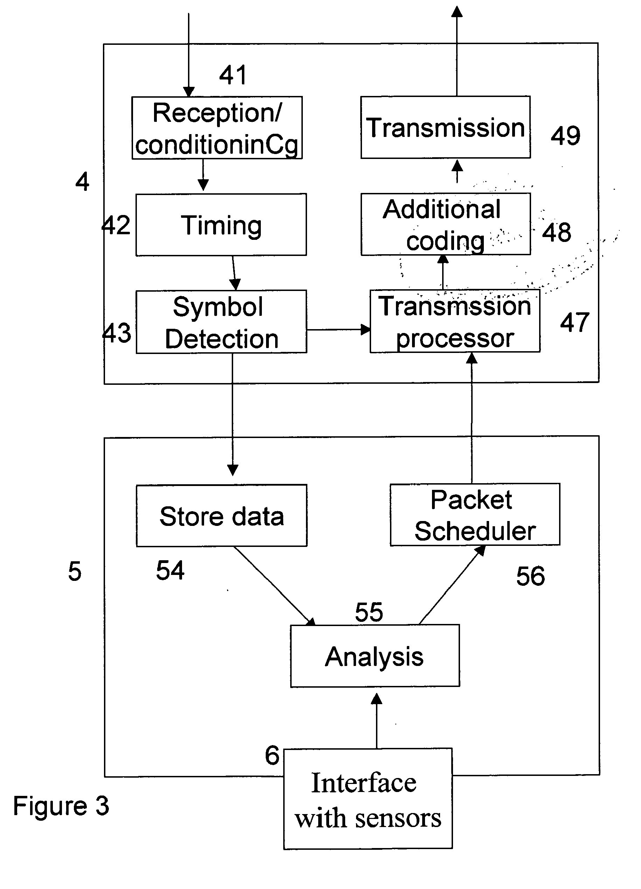

Figure 3 illustrates the operation of the wireless controller 4 and main control unit 5 of the sensor/transceiver device of figure 2.

The wireless controller 4, on receiving a signal collected by the antenna, first performs a signal reception/conditioning step 41 to determine whether the properties of the incoming signal meet a threshold value that allows it to be recognised as valid. A timing detection process 42 next aligns the beginning of packets in time to assist in discarding malformed packets. The wireless receivers need to be continuously synchronised to read the packets correctly. Variations in the signal (in this case, produced by distance and obstacles) will degrade the signal to the potential point where it is not certain whether the receiver is reading a real packet or just noise. The marine environment is almost error-free, meaning that any symbol variation is mainly caused by wave action. However, the sensitivity to pinpoint wave activity can be degraded by distance between the transmitter and receiver. The timing and symbol processes also enforce a threshold for dropping packets because it is difficult to determine the reasons of their damage and repairing them is expensive in processing resource.

The data packets are then subjected to a symbol detection process 43 that samples the symbols in the packet to identify the payload. This involves the analysis of any error correction data to identify the actual payload transmitted from the source device. This payload will in its turn be processed 47 for forwarding to other nodes, in combination with any new data to be generated by the control unit 5. Such processing may include compression of the data, for example to combine payloads from two or more source nodes into one data packet. As already discussed, some data may be suppressed altogether if the node determines that it has already forwarded the same payload, having previously received it from a different source node.

The control unit 5 next processes the incoming signal (54). Over a period of time, each receiver records the actual events of packet arrivals and packets missing, over extended periods. Statistical analysis is used for making predictions, using Bayesian theory, of the state of the inputs based on the recorded event records. Packet rate is consequently not represented as a scalar value or percentage, but as a signal varying over time (frequency and magnitude). As a simple example, the statistical variance of packet rate over a number of cycles indicates how consistently the medium varies. From this data a Bayesian database of the events (packet rate) is created. The payload of the received signals is also stored. The newly stored data is now analysed (55) to identify characteristics that are associated with features of wave activity. Other data, from on board sensors 6, may also be used in this analysis. Such data may include physical or chemical characteristics of the ocean, and position data. The process of acquiring wave activity knowledge is iterative and hopefully convergent. Using the latest "snapshot" of wave activity combined with the other receivers' data received in the payload a greater accuracy may be obtained than is possible using the locally obtained data alone.

Wave activity is determined from statistical analysis whatever source is used (RSSI, accelerometer, packet rate), and a certain number of events need to be recorded before a certain level of confidence can be achieved; even then, this assessment will relate to a past event

The results of this analysis are then scheduled into packets (step 56) ready for onward transmission (47) as already discussed, in combination with any data received from other nodes that is to be relayed.

The nature of the process requires the packets to be robust in the presence of corrupting influences, so additional coding is applied (step 48) for additional resilience against external disruption. This ensures that the payload is delivered, notwithstanding the impairment of the signal that is to be detected. Finally the packet is transmitted (49) over a wireless (radio) connection.

It should be understood that although radio transmission is used in this embodiment, other transmission media may be used such as optical or acoustic, the actual medium and modulation system being selected to be suitable both for the nature of the data to be transmitted (payload) and to its response to the phenomenon being measured.

## Claims

1. A networked collection of environmental telemetry sensors that use data derived from received wireless signals both for supporting data communications and for characterisation of environmental phenomena

2. A network according to claim 1, wherein the wireless medium is electromagnetic.

3. A network according to claim 1, wherein the wireless medium is acoustic.

4. A network according to claim 2 or 3, comprising means for transmitting a signal having a range of frequencies and means for detecting the propagation characteristics of the frequencies received.

5. A network according to any preceding claim, wherein wireless signals received are used to characterise wave motions in a body of liquid in which the sensors are disposed.

6. A network according to any preceding claim, wherein the network is created on an *ad hoc* basis.

7. An environmental telemetry sensor comprising communication means for generating and receiving data-carrying signals using a wireless medium, means for extracting the data from the received signals, analysis means for analysing the signals received to characterise the signal-propagation properties of the environment through which the signals have been transmitted, and means for generating data from the said analysis for transmission over the wireless network.

8. A sensor according to claim 7, wherein the wireless medium is electromagnetic.

9. A sensor according to claim 7, wherein the wireless medium is acoustic.

10. A sensor according to claim 8 or 8, comprising means for transmitting a signal having a range of frequencies and means for detecting the propagation characteristics of frequencies received from similar sensors.

11. A sensor according to claim 7, 8, 9, or 10, comprising means to analyse received wireless signals to characterise wave motions in a body of liquid in which the sensor is disposed.

12. A sensor according to any of claims 7 to 11, comprising means to allow the sensor to perform as a node in an *ad hoc* wireless network to transmit the data collected.

13. A method for collection of environmental data in which a wireless medium is used for both data communications and for characterisation of environmental phenomena.

14. A method according to claim 13, wherein the wireless medium is electromagnetic.

15. A method according to claim 13 wherein the wireless medium is acoustic.

16. A method according to claim 14 or 15, wherein signals having a range of frequencies are transmitted and the propagation characteristics of the frequencies are analysed.

17. A method according to claim 13, 14, 15, 16, or 17, wherein wireless signals received are used to characterise wave motions in a body of liquid in which the sensors are disposed.

18. A method according to claim 13, 14, 15, 16 or 17, wherein the sensors exchange data using an *ad hoc* wireless network.
